# EUROPÄISCHE PATENTSCHRIFT

(11) **EP 2 737 278 B1**
(45) Veröffentlichungstag und Bekanntmachung des Hinweises auf die Patenterteilung: **23.09.2015**
(21) Anmeldenummer: 12738115.0
(22) Anmeldetag: 20.07.2012
(51) Int. Cl.: G01C 15/00, G06F 3/01, G01C 1/04

(54) **BERÜHRUNGSLOS BEDIENBARE VERMESSUNGSVORRICHTUNG UND STEUERVERFAHREN FÜR EINE SOLCHE**
MEASURING DEVICE THAT CAN BE OPERATED WITHOUT CONTACT AND CONTROL METHOD FOR SUCH A MEASURING DEVICE
DISPOSITIF DE MESURE COMMANDABLE SANS CONTACT ET SON PROCÉDÉ DE COMMANDE

(30) Priorität: 25.07.2011 EP 11175257
(43) Veröffentlichungstag der Anmeldung: 04.06.2014
(73) Patentinhaber: Leica Geosystems AG, 9435 Heerbrugg (CH)
(72) Erfinder: METZLER, Bernhard, A-6850 Dornbirn (AT); SIEBER, Stefan, CH-9443 Widnau (CH); LIENHART, Werner, A-8010 Graz (AT); ZOGG, Hans-Martin, CH-8592 Uttwil (CH)
(74) Vertreter: Gyaja, Christoph Benjamin
(86) Internationale Anmeldenummer: PCT/EP2012/064307
(87) Internationale Veröffentlichungsnummer: WO 2013/014084

(56) Entgegenhaltungen:
- EP-A1- 1 081 459
- WO-A1-00/26713

## Beschreibung

Die Erfindung betrifft eine Vermessungsvorrichtung, die ohne Berührung gesteuert werden kann, und ein Verfahren zum Steuern einer derartigen Vermessungsvorrichtung.

Zum Vermessen eines Zielpunktes sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrößen werden dabei im inneren Bezugssystem des Gerätes ermittelt und müssen für eine absolute Positionsbestimmung ggf. noch mit einem äußeren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers-dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 19710722, der DE 19926706 oder der DE 19949580 bekannt.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in den Veröffentlichungsschriften EP 1 081 459 oder EP 1 662 278 gezeigt.

Bei bekannten Vermessungsvorrichtungen ist es üblich, diese grob auf ein Ziel auszurichten. Danach wird das Ziel über eine Optik wie z.B. ein Teleskop durch den Benutzer erfasst und die Vermessungsvorrichtung mittels Feineinstellung genau auf das Ziel ausgerichtet. Dies wird gefolgt von üblichen Vermessungsaufgaben wie Bestimmen der Entfernung, der Richtung, Position etc. Als Ziel können in das Gelände eingebrachte Gegenstände wie zum Beispiel Prismen, Stangen oder Spiegel wie auch ortsfeste Objekte wie zum Beispiel Berggipfel, Kirchtürme, Strommasten und so weiter eingesetzt werden.

Bei den bekannten Vermessungsverfahren ist es immer wieder erforderlich, dass der Benutzer den Blick von dem durch die Optik betrachteten Ziel abwendet, um diverse Einstellungen am dem Vermessungsgerät zu treffen. Dies geschieht normalerweise mittels auf dem Gerät selbst oder einer Fernbedienung angebrachten und mit den Händen zu bedienenden Einstellmitteln, wie Schaltern, Tasten oder Hebeln. Zur Bedienung dieser Mittel muss das Auge des Benutzers sich regelmäßig auf unterschiedliche Entfernungen und Gegenstände konzentrieren, weshalb es anfällig für Ermüdung ist. Außerdem kann die regelmäßige Berührung der Vermessungsvorrichtung zur Betätigung derselben (zum Beispiel bei der Feineinstellung auf ein Vermessungsziel) immer wieder zu Erschütterungen und Stößen kommen, wodurch die Genauigkeit der Vermessung verschlechtert werden kann oder zumindest die Vermessungsarbeit in die Länge gezogen wird. Insbesondere bei hochgenauen Messungen kann es dadurch immer wieder zu Verzögerungen bei der Vermessung kommen.

Es besteht daher Bedarf an einer Vermessungsvorrichtung, die berührungsfrei betätigt werden kann, sowie an einem Verfahren, mit dem eine derartige Vermessungsvorrichtung gesteuert werden kann.

Erfindungsgemäß weist eine Vermessungsvorrichtung eine Anzieleinrichtung und optional eine Darstellungseinrichtung zur Darstellung eines Bilds des durch die Anzieleinrichtung anvisierten Ziels auf. Des Weiteren ist eine zu einem benutzerseitigen Ende der Anzieleinrichtung hin orientierte Augenbilderfassungsvorrichtung vorgesehen, die ausgelegt ist, fortlaufend Bilder eines, insbesondere an dem benutzerseitigen Ende befindlichen, Auges (Augenbilder) eines Benutzers zu erfassen. Die Augenbilderfassungseinrichtung kann können die Augenbilder als Teil einer Aufnahme des ganzen Gesichts oder von Teilen des Gesichts des Benutzers erfassen, insbesondere, den sichtbaren Teil des Auges mit der Augenumrandung umfassend, oder auch nur einen Teil des Benutzerauges erfassen, insbesondere den die Cornea mit Iris und Pupille enthaltenden Vorderteil des Augapfels. Augenbilderfassungseinrichtungen im Sinne dieser Erfindung können dabei Kameras oder auch lichtempfindliche Sensoren sein, beispielsweise zweidimensionale CCD-Sensoren oder, wie in der US 7,697,032 beschrieben, CMOS-Bildsensoren.

Aufgrund der horizontal elliptisch geformten und sphärisch gewölbten Hornhaut (Cornea) des menschlichen Auges kann alternativ auch durch ein dreidimensionales Abtasten der Oberfläche des Benutzerauges, insbesondere des sichtbaren Teils des Augapfels, beispielsweise mit einem Scanner, ein Augenbild im Sinne dieser Erfindung erfasst werden. Ein dreidimensionales Abbild des Auges kann auch mittels mindestens zweier Kameras erzeugt werden.

Die Augenbilderfassungseinrichtung kann derart beschaffen sein, dass sie, wie beispielsweise in der WO 99/05988 beschrieben, in der Lage ist, das Auge des Benutzers aktiv anzuleuchten. Dadurch können auch bei Dunkelheit oder Beschattung des Auges, wie sie zum Beispiel durch grosse Nähe des Auges zum Okular ausgelöst werden kann, noch Augenbilder erfasst werden. Als Beleuchtungsmittel kommen insbesondere LED in Frage. Um zu verhindern, dass das Benutzerauge geblendet wird, wodurch die Zielerkennung durch den Benutzer bei geringer Helligkeit stark erschwert werden würde, findet dieses aktive Anstrahlen des Benutzerauges bevorzugt in einem nichtsichtbaren Wellenlängenbereich elektromagnetischer Strahlung statt, beispielsweise mittels infraroten Lichts, wie in der WO 2011/064534 beschrieben. Dazu muss die Augenbilderfassungseinrichtung zum Empfang der jeweils emittierten elektromagnetischen Strahlung geeignet sein.

Seitens des Vermessungsgerätes werden Auswertemittel zur Datenspeicherung und Steuerung der Ausrichtung der Anzieleinheit bereitgestellt, die zur Ausführung einer automatischen blickrichtungsabhängigen Anzielfunktionalität ausgebildet sind. Die Auswertemittel enthalten insbesondere maschinenlesbare Datenträger mit Computerprogrammcode zur Ausführung des erfindungsgemässen Verfahrens. Zum Bestimmen der Blickrichtung des Benutzerauges fungieren die Auswertemittel als eine Blickrichtungsbestimmungseinrichtung.

Die Blickrichtungsbestimmungseinrichtung dient dazu, in jedem der fortlaufend erfassten Augenbilder den Pupillenmittelpunkt des Benutzerauges zu ermitteln, bzw. Informationen zu erfassen, aus denen der Pupillenmittelpunkt ableitbar ist (Augeninformationen); dies können zum Beispiel die Lage der Pupille oder der Iris sein, oder allgemein auch die Verteilung heller und dunkler Flächen im erfassten Augenbild. Die Ermittlung des Pupillenmittelpunkts oder anderer Augenmerkmale anhand der Augenbilder kann vorzugsweise mittels - dem Fachmann gut bekannter - Bilderkennungssysteme mit einer Mustererkennung einer Maske für die Form des Auges und einer weiteren für die Pupille oder andere Augenmerkmale geschehen. Auf Basis der ermittelten oder abgeleiteten Position des Pupillenmittelpunkts bestimmt die Blickrichtungsbestimmungseinrichtung dann die Blickrichtung des Benutzerauges.

Des weiteren kann die Blickrichtungsbestimmungseinrichtung in der Lage sein, den Abstand des - ermittelten oder abgeleiteten - Pupillenmittelpunkts von der optischen Achse der Anzieleinrichtung zu ermitteln. Auf Basis des ermittelten Abstands kann die Blickrichtungsbestimmungseinrichtung dann die Blickrichtung des Benutzerauges bestimmen.

Bekannte Vermessungsvorrichtungen, wie zum Beispiel Total-stationen, können über Anzieleinrichtungen mit Teleskopen, Weitwinkelkameras, Übersichtskameras, Achsenkameras und anderem verfügen. Zur Darstellung des Bilds eines durch die Anzieleinrichtung anvisierten Ziels dient eine Darstellungseinrichtung, die zum Beispiel als Anzeige in der Anzieleinrichtung ausgeführt ist. Da die Anzieleinrichtung in der Lage ist, in ihrer Bildebene ein reelles Bild des anvisierten Ziels zu zeigen, kann als Darstellungseinrichtung z.B. ein Okular der Anzieleinrichtung dienen, das eine direkte Beobachtung des Bilds durch das menschliche Auge ermöglicht.

Alternativ oder zusätzlich kann eine Mattscheibe in der Bildebene als Darstellungseinrichtung dienen, die z.B. als Fotosensor ausgeführt sein kann. Das Bildsignal kann dann zu einer innerhalb oder außerhalb der Anzieleinrichtung vorgesehenen Anzeige wie z.B. einem LCD-Monitor übertragen werden.

Als Augenbilderfassungseinrichtung zur Erfassung von fortlaufenden Augenbildern eines an dem benutzerseitigen Ende befindlichen Auges eines Benutzers kann beispielsweise eine Videokamera dienen, die bevorzugt entlang der optischen Achse der Anzieleinrichtung ausgerichtet ist. Die Augenbild-erfassungseinrichtung kann aber auch außerhalb der Anzieleinrichtung bereitgestellt werden. Sie kann beispielsweise in einer handhaltbaren Bedieneinheit angebracht sein oder auch in einer speziellen Brille.

In dem erfassten Augenbild ist es mittels Bildextraktionsverfahren möglich, die exakte Position der Pupille beziehungsweise des Pupillenmittelpunkts des Benutzerauges zu ermitteln. Da die Position der optischen Achse der Anzieleinrichtung in Relation zu den erfassten Augenbildern des Pupillenmittelpunkts bekannt ist, ist es möglich, einen Abstand - bevorzugt einen Pixelabstand - des Pupillenmittelpunkts von der optischen Achse zu ermitteln. Auf Basis des ermittelten Abstands ist es dann möglich, die Blickrichtung des Benutzerauges zu bestimmen. Hierzu ist es im Übrigen nicht erforderlich, das Augenbild für den Benutzer sichtbar darzustellen.

Abhängig von der verwendeten Anzieleinrichtung kann es je nach dem Strahlengang in der Anzieleinrichtung genügen, den Abstand des Pupillenmittelpunkts von der optischen Achse zu bestimmen, da die Blickrichtung des Benutzerauges als Gerade durch den Pupillenmittelpunkt definiert ist.

Zur Erhöhung der Genauigkeit ist es möglich, die Anatomie des menschlichen Auges zu berücksichtigen. Da der menschliche Augapfel im Wesentlichen kugelförmig ist, und sein Durchmesser durchschnittlich 2,5 cm beträgt, kann ein Winkel zwischen der Blickrichtung des Benutzerauges und der optischen Achse als Winkelversatz einfach bestimmt werden. Dies ist beispielsweise mittels Sinussatz oder Dreisatz möglich. Als Drehpunkt des Augapfels, um den die Änderung der Blickrichtung stattfindet, dient dabei im Wesentlichen dessen Mittelpunkt.

Alternativ dazu oder zur Überprüfung der ermittelten Blickrichtung kann eine Kalibriereinrichtung vorgesehen sein, die in dem angezeigten Bild des Ziels aufeinanderfolgend einzelne Bildpunkte z.B. mittels Beleuchten derselben markiert, und den Abstand zwischen dem Pupillenmittelpunkt und der optischen Achse bei Betrachtung der jeweils markierten Bildpunkte ermittelt. Da die den markierten Punkten entsprechende jeweilige Blickrichtung bekannt ist, ist es auf diese Weise möglich, eine Abweichung bei dem Ergebnis der Ermittlung der Blickrichtung festzustellen. Gemäß den festgestellten Abweichungen kann dann im Betrieb die ermittelte Blickrichtung korrigiert werden. Die Anpassung der Blickrichtung kann dann beispielsweise durch ein Interpolieren der zuvor gemessenen Abweichungen erfolgen.

Es ist möglich, nach Ermittlung der Blickrichtung des Benutzerauges die Lage der Anzieleinrichtung auf Basis des ermittelten Abstands und/oder Winkelversatzes derart zu verändern, dass die optische Achse der Anzieleinrichtung und die Blickrichtung des Benutzerauges zusammenfallen. Dies entspricht beispielsweise der Feineinstellung auf ein Vermessungsziel, das der Benutzer durch ein Teleskop anvisiert. Hierbei kann die Lageänderung der Anzieleinrichtung um den Mittelpunkt des Benutzers herum erfolgen, damit der Benutzer nicht durch eine Veränderung der Darstellung des anvisierten Ziels abgelenkt wird, die durch die Bewegung der Anzieleinrichtung erfolgt.

Vorteilhaft kann in der Anzieleinrichtung ein Fadenkreuz vorgesehen sein. Das Fadenkreuz kann fest der optischen Achse der Anzieleinrichtung zugeordnet sein, oder es kann als bewegliches Fadenkreuz ausgeführt sein. Es können aber auch ein festes und ein oder mehrere bewegliche Fadenkreuze vorgesehen sein. Gemäß der ermittelten Blickrichtung des Benutzerauges kann dann die Position des jeweiligen Fadenkreuzes so verändert werden, dass die Blickrichtung des Benutzerauges durch das Fadenkreuz gerichtet ist.

Vorteilhaft ist es möglich, die Veränderungsgeschwindigkeit bei der Ausrichtungsänderung oder der Bewegung des Fadenkreuzes von dem ermittelten Abstand und/oder Winkelversatz abhängig zu machen. So ist es möglich, bei größeren Abständen/ Winkelversätzen, die Lageänderung der Anzieleinrichtung und/oder des/der Fadenkreuze mit höherer Geschwindigkeit durchzuführen als bei einem kleinen Abstand/Winkelversatz. Vorteilhaft ist es möglich, zum Beispiel durch ein Zwinkern des Benutzerauges, ein Steuersignal abzugeben. Dazu wird die Blickbestimmungseinrichtung beispielsweise derart ausgelegt, dass sie eine bestimmte Anzahl von Augenbildern, in denen ein Pupillenmittelpunkt nicht ermittelbar ist, als Steuersignal interpretiert. Auch ein geschlossenes Auge oder der Vorgang des Schliessens und Öffnens des Auges kann, insbesondere mittels Bilderkennungssysteme mit einer Mustererkennung einer Maske, als Zwinkern erkannt und als Steuersignal interpretiert werden.

Auch Bewegungen des Augapfels des Benutzerauges (Augenbewegungen) oder Kombinationen von Augenbewegungen können als Steuersignal interpretiert werden. Über eine Kalibriereinrichtung können beispielsweise vor dem Beginn der Vermessungsarbeit verschiedene Zeitdauern und/oder Wiederholungen eines Zwinkerns mit dem Benutzerauge oder bestimmte Augenbewegungskombinationen unterschiedlichen Steuerbefehlen zugewiesen werden. Beispielsweise kann der Beginn und/oder das Ende einer dynamischen Ausrichtungsänderung der Anzieleinrichtung mittels eines solchen berührungslosen Steuerbefehls ausgelöst werden.

Alternativ oder zusätzlich kann die Darstellung des Ziels durch optisch dargestellte Steuerbefehle überlagert oder ersetzt sein. Beispielsweise können die Steuerbefehle in Form von Piktogrammen oder auch in Form von Text für den Benutzer sichtbar sein. Dabei kann die Blickrichtungsbestimmung so ausgelegt sein, dass auf Basis des ermittelten Abstands zwischen dem Pupillenmittelpunkt und der optischen Achse (beispielsweise entsprechend der Mittelpunktsachse der Darstellung) erkannt wird, welcher der optisch dargestellten Steuerbefehle von dem Benutzer anvisiert wird, d.h. welcher Steuerbefehl in der Blickrichtung liegt. Dieser betreffende Steuerbefehl kann dann beispielsweise mittels Zwinkern aktiviert werden. Vorteilhaft kann es dabei möglich sein, den aktuell anvisierten Steuerbefehl durch Farbveränderung und/ oder Beleuchtung zu kennzeichnen.

Ebenfalls kann es möglich sein, eine erfindungsgemäße Vermessungsvorrichtung mit einer Zielpunkterkennungseinrichtung bereitzustellen. Die Zielpunkterkennungseinrichtung ist in der Lage, in der Darstellung des anvisierten Ziels mögliche Zielpunkte zu erkennen, die in der Blickrichtung des Benutzerauges liegen, und diese beispielsweise durch Beleuchten oder durch eine Farbänderung zu markieren. Auf Abgabe eines Steuersignals hin, zum Beispiel durch einmaliges Zwinkern, können die Zielpunkte angezielt, vermessen und samt ihrer Daten wie Entfernung, Richtung, Höhe etc. in einer Speichereinrichtung gespeichert werden. Bei Einsatz von mehreren Fadenkreuzen können entsprechend mehrere Zielpunkte hintereinander markiert werden.

In einem erfindungsgemäßen Verfahren zum Steuern einer Vermessungsvorrichtung, die ein durch eine Anzieleinrichtung anvisiertes Ziel darstellt, wird, insbesondere fortlaufend, ein Bild eines Benutzerauges (Augenbild) erfasst. Anhand bestimmter Merkmale des Augenbildes kann eine Blickrichtung des Benutzerauges abgeleitet werden. Dies kann beispielsweise ein Abstand eines Pupillenmittelpunkts des Benutzerauges von der optischen Achse der Anzieleinrichtung sein oder eine Position der Pupille oder der Iris in Relation zum Augenumfang. Auf Basis des bestimmten Abstands wird die Lage der optischen Achse der Anzieleinrichtung oder die Lage eines beweglichen Fadenkreuzes in der Darstellung des anvisierten Ziels verändert. Dadurch fällt die optische Achse der Anzieleinrichtung mit der Blickrichtung des Benutzerauges zusammen oder die Blickrichtung des Benutzerauges ist durch das Fadenkreuz gerichtet.

Basierend auf dem Abstand des Pupillenmittelpunkts und der optischen Achse einerseits und einem Durchmesser des Augapfels andererseits kann ein Winkel zwischen der Blickrichtung des Benutzerauges und der optischen Achse des Winkelversatzes bestimmt werden. Alternativ oder zusätzlich ist es möglich, durch ein aufeinanderfolgendes Markieren einzelner Bildpunkte und dem dabei jeweils ermittelten Abstand zwischen dem Pupillenmittelpunkt und der optischen Achse eine Abweichung der ermittelten Blickrichtung des Benutzerauges von der tatsächlichen Blickrichtung des Benutzerauges zu bestimmen.

Vorteilhaft kann die Ausrichtung der Anzieleinheit mit in Abhängigkeit von dem Abstand des Pupillenmittelpunktes des Benutzerauges von der optischen Achse der Anzieleinrichtung veränderlicher Geschwindigkeit geändert werden.

Die Darstellung des Ziels kann durch optisch dargestellte Steuerbefehle überlagert oder ersetzt sein. Mit Hilfe der Blickrichtungsbestimmungseinrichtung können auf Basis des ermittelten Abstands zwischen dem Pupillenmittelpunkt und der optischen Achse der Anzieleinrichtung ein anvisierter der optischen dargestellten Steuerbefehle ausgewählt werden.

Vorteilhaft kann eine Zielpunkterkennungseinrichtung in der Darstellung des anvisierten Ziels nahe der Blickrichtung liegende mögliche Zielpunkte erkennen und diese markieren. Auf Abgabe eines Steuersignals hin kann der entsprechende Zielpunkt von der Anzieleinrichtung angezielt, vermessen und samt seiner zugehörigen Daten wie Richtung, Entfernung, Höhe etc. gespeichert werden.

In der Europäischen Anmeldung EP11150580.6 wird ein Konzept für eine dynamische Anzielfunktion beschrieben, die eine Steuerung durch Berühren einer berührungsempfindlichen Oberfläche beinhaltet, wobei diese Oberfläche in durch ein virtuelles Liniennetz gebildete Sektoren aufgeteilt ist. Auch diese Funktion lässt sich gemäss der vorliegenden Erfindung berührungslos mit dem Auge steuern.

Die erfindungsgemässe Vermessungsvorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. In den Figuren zeigen schematisch:
Fig. 1 ein als Totalstation ausgebildetes erfindungsgemäßes geodätisches Vermessungsgerät;
Fig. 2a eine erste Ausführung eines optischen Aufbaus einer Anzieleinrichtung eines erfindungsgemäßen geodätischen Vermessungsgeräts;
Fig. 2b eine zweite Ausführung eines optischen Aufbaus einer Anzieleinrichtung eines erfindungsgemäßen geodätischen Vermessungsgeräts;
Fig. 3 einen Aufbau einer erfindungsgemäßen Vermessungsvorrichtung;
Fig. 4a ein Augenbild und eine Mustererkennung des Benutzerauges und des Pupillenmittelpunktes mittels Masken;
Fig. 4b ein Augenbild mit einem dezentral aufgenommenen Benutzerauge;
Fig. 4c ein Augenbild mit einem geschlossenen Benutzerauge;
Fig. 5 eine beispielhafte Illustration zur Ermittlung eines Winkelversatzes beziehungsweise einer Blickrichtung auf Basis eines Pupillenabstands von einer optischen Achse;
Fig. 6a ein erstes Beispiel für eine Ausrichtung einer Anzieleinrichtung anhand von Augenbildern eines Benutzerauges;
Fig. 6b ein zweites Beispiel für eine Ausrichtung einer Anzieleinrichtung anhand von Augenbildern eines Benutzerauges;
Fig. 7 ein Flussdiagramm zur Bewegung eines Teleskops;
Fig. 8 ein Beispiel einer weiteren Ausführungsform, in der ein Fadenkreuz in einem Bild eines durch die Anzieleinrichtung anvisierten Ziels verschiebbar vorgesehen ist;
Fig. 9 das Bild der Fig. 8, in das Steuerbefehle eingeblendet sind; und
Fig. 10 die Funktionsweise einer dynamischen Anzielfunktionalität anhand eines Beispiels.

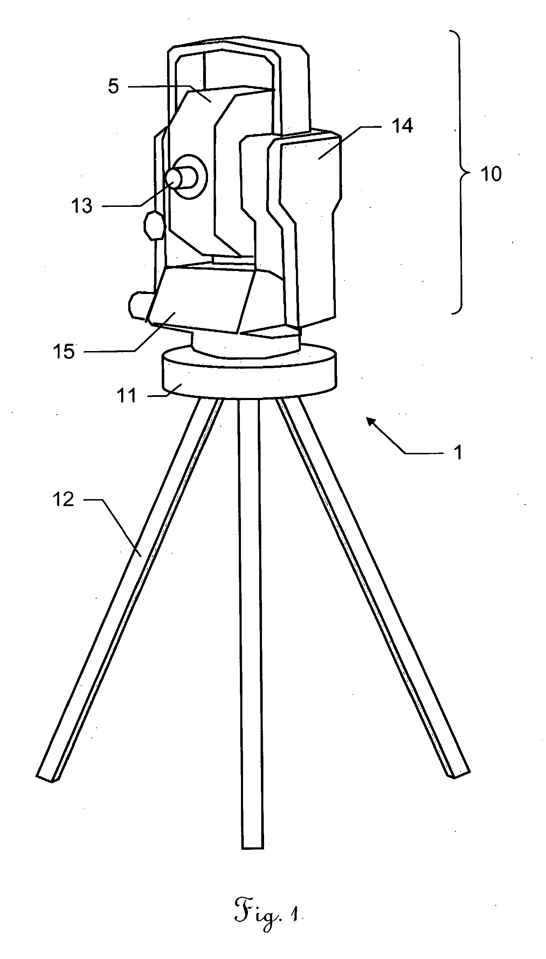

Figur 1 zeigt ein als Totalstation ausgebildetes erfindungsgemäßes geodätisches Vermessungsgerät 1 zur Messung von Horizontalwinkeln, Vertikalwinkeln und Distanzen zu einem beabstandeten Zielobjekt.

Die Totalstation ist auf einem Stativ 12 angeordnet, wobei eine Basis 11 der Totalstation direkt und fest mit dem Stativ verbunden ist. Der Hauptkörper der Totalstation, der auch als Oberteil 10 bezeichnet wird, ist relativ zur Basis 11 um eine vertikale Stehachse drehbar. Das Oberteil 10 weist dabei eine - z.B. durch zwei Säulen gebildete - Stütze 14, eine zwischen den Säulen um die horizontale Kippachse drehbar gelagerte Visiereinrichtung 5, beispielsweise ein Teleskop, sowie eine elektronische Anzeige-Steuereinheit 15 auf. Die Anzeige-Steuereinheit 15 kann in bekannter Weise zur Steuerung des Vermessungsgeräts 1 sowie zur Verarbeitung, Anzeige und Speicherung von Messdaten ausgebildet sein.

Die Visiereinrichtung 5 ist an der Stütze 14 um eine horizontale Kippachse drehbar angeordnet und kann somit zur Ausrichtung auf ein Zielobjekt relativ zur Basis 11 horizontal und vertikal geschwenkt bzw. gekippt werden. Zur Ausführung nötiger Schwenk- und Kippbewegungen für die Ausrichtung der Visiereinrichtung sind (hier nicht dargestellte) Motoren vorhanden. Die Visiereinrichtung 5 kann als eine gemeinsame Visiereinrichtungs-Baueinheit ausgeführt sein, wobei ein Objektiv, eine Fokussieroptik, ein koaxialer Kamerasensor, das Okular 13 sowie ein Grafikprozessor in einem gemeinsamen Visiereinrichtungs-Gehäuse integriert sein können. Mittels der Visiereinrichtung 5 kann das Zielobjekt angezielt und die Entfernung von der Totalstation zu dem Zielobjekt elektrosensorisch erfasst werden. Weiters sind Mittel zum elektrosensorischen Erfassen der Winkelausrichtung des Oberteils 10 relativ zur Basis 11 und der Visiereinrichtung 5 relativ zur Stütze 14 vorgesehen. Diese elektrosensorisch erfassten Messdaten werden der Anzeige-Steuereinheit 15 zugeführt und von dieser verarbeitet, so dass die Position des Zielpunkts relativ zur Totalstation durch die Anzeige-Steuereinheit 15 ermittelbar, optisch anzeigbar und speicherbar ist.

Bis hierhin ist das Vermessungsgerät aus dem Stand der Technik bekannt. Zusätzlich wird erfindungsgemäß eine (hier nicht dargestellte) zum benutzerseitigen Ende der Anzieleinrichtung 5 hin orientierte Kamera 4 als erfindungsgemäße Augenbilderfassungseinrichtung bereitgestellt, die Bilder des Auges 3 des Benutzers aufnehmen kann.

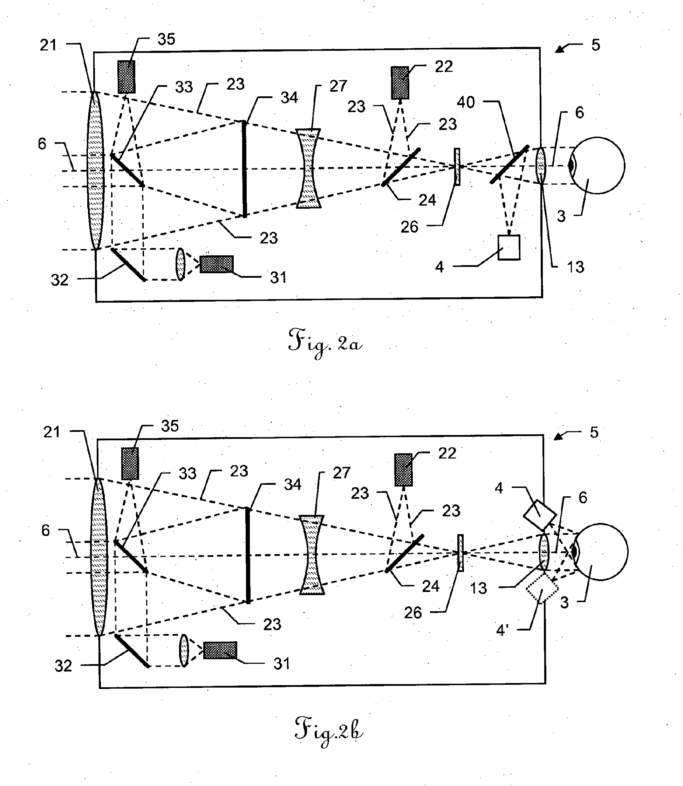

Figur 2a zeigt einen optischen Aufbau einer Anzieleinrichtung 5 eines erfindungsgemäßen geodätischen Vermessungsgeräts 1. Mittels einer Objektiveinheit 21 und dem zugehörigen Strahlengang von einem anzuvisierenden Ziel bzw. Objekt durch die Objektiveinheit 21 wird eine optische Zielachse 6 definiert, die auf das zu beobachtende Ziel oder Objekt auszurichten ist. Die Objektiveinheit 21 kann mehrlinsig aufgebaut sein. Ein Kamerasensor 22 mit pixeldefinierter Auflösung dient zur Erfassung eines Kamerabildes eines anzuvisierenden Objekts, Ziels bzw. einer Zielmarke.

Von der Objektiveinheit 21 zum Kamerasensor 22 erstreckt sich ein Strahlengang 23, der mit einem optischen Umlenkelement 24 gefaltet sein kann, wie in Figur 2 dargestellt, oder aber auch durchgehend geradlinig ausgebildet sein kann. Das optische Umlenkelement 24 kann beispielsweise als ein Strahlteiler oder teildurchlässiger Spiegel ausgebildet sein, so dass ein Teil, zum Beispiel 50 %, des in dem Strahlengang 23 bis zu dem Umlenkelement 24 geführten Lichts auf den Kamerasensor 22 geleitet wird und sich ein anderer Teil weiter in Richtung der Zielachse zu einer Okulareinheit 13 für einen Beobachter ausbreiten kann. In Ausbreitungsrichtung des von der Objektiveinheit 21 erfassten Lichts kann vor dem Okular eine Justier- bzw. Ausrichtungshilfe 26, beispielsweise ein Fadenkreuz, fest angeordnet sein. Außerdem kann im Strahlengang zwischen der Objektiveinheit 21 und dem optischen Umlenkelement 24 ein in seiner Positionierung längs der Achse 6 veränderliches Fokussierglied 27 zur Veränderung der Fokussierposition für das von der Objektiveinheit 21 erfasste Licht angeordnet sein. Das Fokussierglied 27 kann mehrlinsig ausgebildet sein. Vorteilhaft ist für das Fokussierglied 27 eine stabile, präzise reproduzierbare Positionierung für Bilderfassung von in großer Entfernung angeordneten Objekten mit einem de facto parallelen Strahlengang zur Objektiveinheit 21 vorgesehen.

Optional kann die Anordnung zusätzlich mit Mitteln für eine elektro-optische Distanzmessung ausgestattet sein. Dazu kann, wie in Figur 2 dargestellt, eine Messstrahlungsquelle 31 (z.B. emittierend im nahen infraroten, für das menschliche Auge nicht sichtbaren Spektralbereich) verwendet werden, deren Messstrahlung über ein optisches Umlenkelement 32, beispielsweise einen Spiegel, auf ein weiteres optisches Umlenkelement 33, beispielsweise einen im Spektralbereich der Lichtquelle 31 reflektierenden und im übrigen Spektralbereich transmittierenden dichroitischen Strahlteiler, und von dort weiter durch die Objektiveinheit 21 zu einer anzuvisierenden Zielmarke gelenkt wird. In dieser optionalen Ausführungsform eines optischen Aufbaus einer Anzieleinrichtung des erfindungsgemässen geodätischen Vermessungsgeräts passiert ein Teil des am Ziel diffus oder gerichtet reflektierten und von der Objektiveinheit 21 erfassten Lichts mit der Wellenlänge der Lichtquelle 31 das Umlenkelement 33 und breitet sich weiter aus bis zu einem dichroitischen Strahlauskoppler 34, der reflektierend für Licht der Emissionswellenlänge der Lichtquelle 31 und transmittierend für Licht des übrigen Spektralbereichs ausgebildet ist. Das von dem dichroitischen Strahlauskoppler 34 zurückgeworfene Messlicht wird über das Umlenkelement 33 zu einem Detektor 35 für eine elektro-optische Distanzmessung geleitet. Beispielsweise kann die Lichtquelle 31 gepulst sein und die Distanzmessung in bekannter Weise durch Bestimmung von Pulslaufzeiten oder Phasendifferenzen zwischen emittiertem und reflektiertem Licht erfolgen.

Alternativ kann der Kamerasensor 22 auch auf der optischen Zielachse 6 angeordnet sein (hier nicht dargestellt). Der Strahlengang von der Objektiveinheit längs der optischen Zielachse 6 wird in dieser Anordnung mit dem Kamerasensor 22 beendet. Der Kamerasensor ist dann mit Auswertemitteln verbunden, von denen das aktuell erfasste Bild 2 des Kamerasensors 22, gegebenenfalls mit überlagerten Zielmarkenmustern, auf ein Display ausgegeben werden kann, gegebenenfalls so, dass einem Betrachter ein Eindruck vermittelt wird, als würde er durch das Okular 13 eine direkte "Fernrohr-Abbildung" eines betrachteten Objekts, Ziels oder Zielmusters sehen. Ein solches System wird bereits in der Veröffentlichungsschrift WO2010/092087A1 beschrieben.

Bis hierhin ist die Anzieleinrichtung aus dem Stand der Technik bekannt. Erfindungsgemäß wird zusätzlich eine Kamera 4 bereitgestellt, die über ein Umlenkelement 40 und durch das Okular 13 Bilder des Benutzerauges 3 aufnehmen kann.

Figur 2b zeigt eine zweite Ausführungsform eines optischen Aufbaus einer Anzieleinrichtung 5 eines erfindungsgemäßen geodätischen Vermessungsgeräts 1. Im Gegensatz zur in Figur 2a dargestellten Ausführungsform ist die Kamera 4 nicht im innern sondern an der Außenseite der Anzieleinrichtung 5 angebracht und nimmt direkt Bilder vom Auge 3 des Benutzers auf. Zur besseren Erfassung des ganzen Auges 3 ist es auch möglich, eine weitere Kamera 4' oder eine Vielzahl von Kameras zu verwenden, die gemeinsam Bilder des Benutzerauges 3 aufnehmen können. Durch die Verwendung mehrerer Kameras 4,4' ist es möglich, auch dreidimensionale Bilder des Benutzerauges 3 zu erfassen und beispielsweise anhand der Wölbung der Cornea des Benutzerauges 3 auf eine Blickrichtung zu schliessen. Die Kamera 4 oder die Kameras können auch ausserhalb der Anzieleinrichtung 13 bereitgestellt werden, beispielsweise in einem peripheren Gerät des Vermessungsgerätes 1, wie einer Brille oder einer handhaltbaren Bedieneinheit.

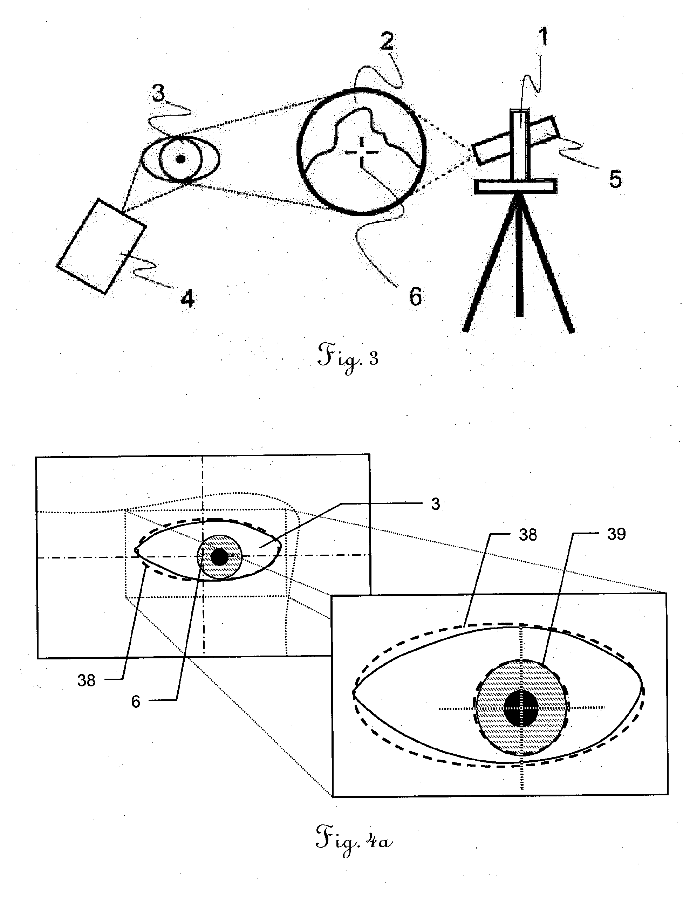

Figur 3 zeigt einen beispielhaften, schematischen Aufbau einer erfindungsgemäßen Vermessungsvorrichtung. In Figur 3 ist die Vermessungsvorrichtung in Form einer Totalstation 1 mit einem Teleskop 5 ausgebildet. Bezugszeichen 2 in Fig. 3 stellt schematisch ein von dem Teleskop 5 erstelltes Bild einer Vermessungsumgebung dar, das ein Beispiel für ein erfindungsgemäßes Bild eines durch die Anzieleinrichtung anvisierten Ziels ist. Das Teleskop 5 der Totalstation 1 bildet eine erfindungsgemäße Anzieleinrichtung.

Bezugszeichen 3 in Figur 3 stellt ein menschliches Auge (Benutzerauge) dar, welches das Bild 2 durch das Okular 13 des Teleskops 5 betrachtet. Je nach Aufbau des Teleskops 5 kann das erstellte Bild 2 der Vermessungsumgebung eine direkt durch die Optik des Teleskops 5 betrachtete Vermessungsumgebung sein, oder auf eine Anzeige, wie zum Beispiel einen LCD-Bildschirm, projiziert werden. Bezugszeichen 4 in Figur 3 bezeichnet eine Kamera, die, insbesondere fortlaufend, Augenbilder des Benutzerauges 3 aufnimmt. Die Kamera 4 dient dabei als erfindungsgemäße Augenbilderfassungseinrichtung. Die Kamera 4 ist derart zur optischen Achse des Teleskops 5 der Totalstation 1 ausgerichtet, dass ein Zentrum des jeweils erfassten Augenbilds der optischen Achse des Teleskops 5 der Totalstation 1 entspricht.

Blickt der Benutzer genau in Richtung der optischen Achse 6 des Teleskops 5, die im Bild 2 durch ein kleines Fadenkreuz dargestellt ist, liegt das Zentrum der Pupille des Auges 3 genau im Mittelpunkt des aktuell von der Kamera 4 erfassten Augenbilds. Diese Position entspricht der Position der optischen Achse 6 im Bild 2.

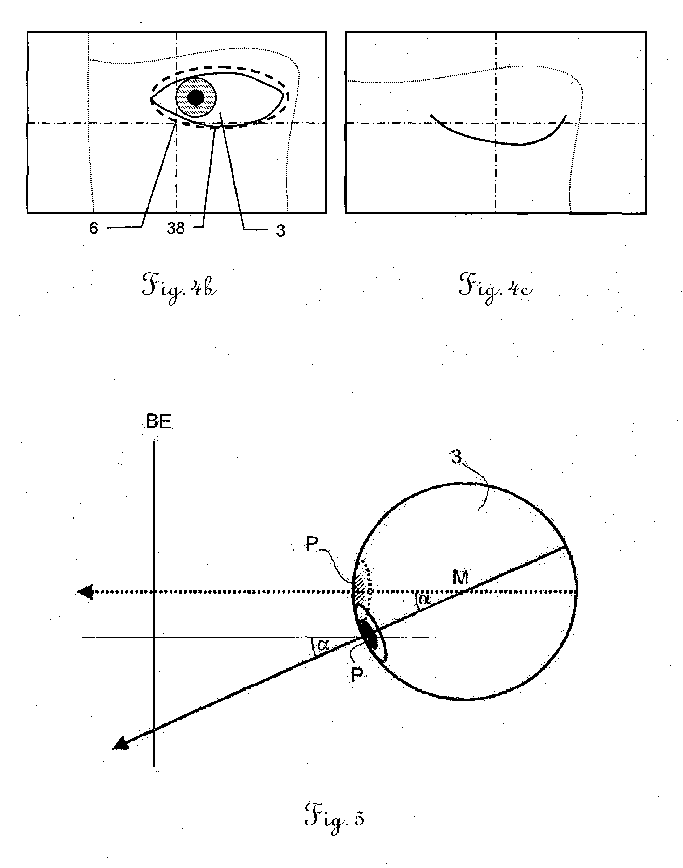

Figur 4a stellt ein Beispiel für ein von einer Kamera erfasstes Augenbild dar, das auf die optische Achse 6 zentriert ist. Das Benutzerauge 3 kann durch Bilderkennungs- und Mustererkennungsverfahren mittels einer Maske 38 als solches erkannt werden. Durch eine weitere Maske 39 (hier dargestellt eine Maske zur Erkennung der Iris) werden innerhalb des als solchem erkannten Benutzerauges 3 der Pupillenmittelpunkt und seine Position in Relation zum Augenumfang ermittelt. Zur Bild- oder Mustererkennung muss das Benutzerauge nicht zentral auf der optischen Achse 6 gelegen sein, sondern es kann, wie in Figur 4b dargestellt, auch abseits der optischen Achse liegen. Ist das Auge geschlossen, wie in Figur 4c angedeutet, wird kein Benutzerauge 3 erkannt, bzw. es kann durch eine weitere (nicht dargestellte) Maske erkannt werden, dass das Auge geschlossen ist.

Bewegt der Benutzer sein Auge 3, um einen Gegenstand oder ein Objekt in dem Bild 2 abseits der optischen Achse genauer zu betrachten beziehungsweise mit dem Auge 3 anzuvisieren, vollführt der Augapfel des Benutzerauges 3 eine Drehbewegung um den Mittelpunkt M des Augapfels herum, um die Blickrichtung des Auges 3 zu dem anvisierten Punkt hin zu ändern. Die Blickrichtung entspricht dabei im Wesentlichen der Sehachse des menschlichen Auges 3, die im Wesentlichen durch die Pupille P einerseits und die an der Innenseite des Augapfels der Pupille P gegenüberliegende Sehgrube definiert ist.. Die Sehgrube ist der Teil des Auges 3, der insbesondere für scharfes Farbsehen verantwortlich ist. Die Sehachse verläuft also in etwa von der Sehgrube über den Mittelpunkt M des Augapfels durch den Mittelpunkt der Pupille P des Auges 3. Die Sehachse entspricht dabei der Blickrichtung.

Durch die beschriebene Bewegung des Augapfels kommt es zu einer Veränderung der Pupillenposition. Diese Veränderung wird durch eine in der Kamera 4 vorgesehene Augenbilderfassungseinrichtung erfasst, die in der Lage ist, den Abstand des Pupillenmittelpunkts von der optischen Achse oder die Position der Pupille in Relation zum Augenumfang in Form von Augenbildpunkten zu ermitteln. Aus der Position des Pupillenmittelpunktes in Relation zum Augenumfang kann der Drehwinkel des Auges 3 abgeleitet werden. Da der Abstand der Pupille von der Augenbildebene des durch die Kamera 4 erfassten Augenbilds bekannt ist, und der Durchmesser des menschlichen Augapfels mit etwa 2,5 cm ebenfalls bekannt ist, ist es auch möglich, einen Wert zu ermitteln, beispielsweise einen Winkel α, um welchen die aktuelle Blickrichtung von der optischen Achse abweicht. Diese Möglichkeit ist in Figur 5 dargestellt.

In Figur 5 ist ein Auge 3 dargestellt, dessen aktuelle Blickrichtung mit einer durchgehend gezeichneten Linie dargestellt ist. Die Position der Pupille P und die Blickrichtung exakt geradeaus nach vorne sind in Figur 5 mittels einer gestrichelten Linie bzw. schraffiert dargestellt. Da der Abstand der Pupille P zum Mittelpunkt M des Augapfels (ca. 12,5 mm), der Abstand von der Pupille P zur Bildebene BE des Augenbilds und der Abstand der Pupille P von der exakten Mitte entsprechend der Blickrichtung direkt geradeaus nach vorne bekannt sind, ist z.B. mittels Dreisatz der Schnittpunkt S der aktuellen Blickrichtung mit der Bildebene BE des Augenbilds zu bestimmen. Somit ist es auf Basis des Abstands des Pupillenmittelpunkts von dem Zentrum des durch die Kamera 4 erfassten Augenbilds möglich, die Abweichung der aktuellen Blickrichtung von der optischen Achse 6, beispielsweise ausgedrückt durch den Winkel α, und damit die Blickrichtung des Benutzerauges 3 hinreichend genau zu bestimmen.

Da die Blickrichtung des Benutzerauges 3 im Verhältnis zur optischen Achse 6 des Teleskops 5 der Totalstation 1 hinreichend genau bestimmt werden kann, ist es ebenfalls möglich, durch eine (nicht dargestellte) Antriebseinrichtung das Teleskop 5 derart zu verstellen, dass seine optische Achse 6 auf das Ziel ausgerichtet ist, das der Benutzer durch das Okular 13 betrachtet, wobei im Spezialfall die optische Achse 6 mit der Blickrichtung des Benutzerauges 3 zusammenfällt. Da gemäß Figur 3 das Fadenkreuz fest der Position der optischen Achse 6 zugeordnet ist, geht die Blickrichtung des Benutzerauges 3 nach dieser Verstellung durch das Fadenkreuz.

Es ist dabei möglich, dass das Teleskop 5 um den Mittelpunkt M des Augapfels des Benutzerauges 3 herum verstellt wird, um eine Veränderung des Bilds 2 für den Benutzer durch eine Verschiebung des Teleskops 5 oder Ähnliches auszuschließen.

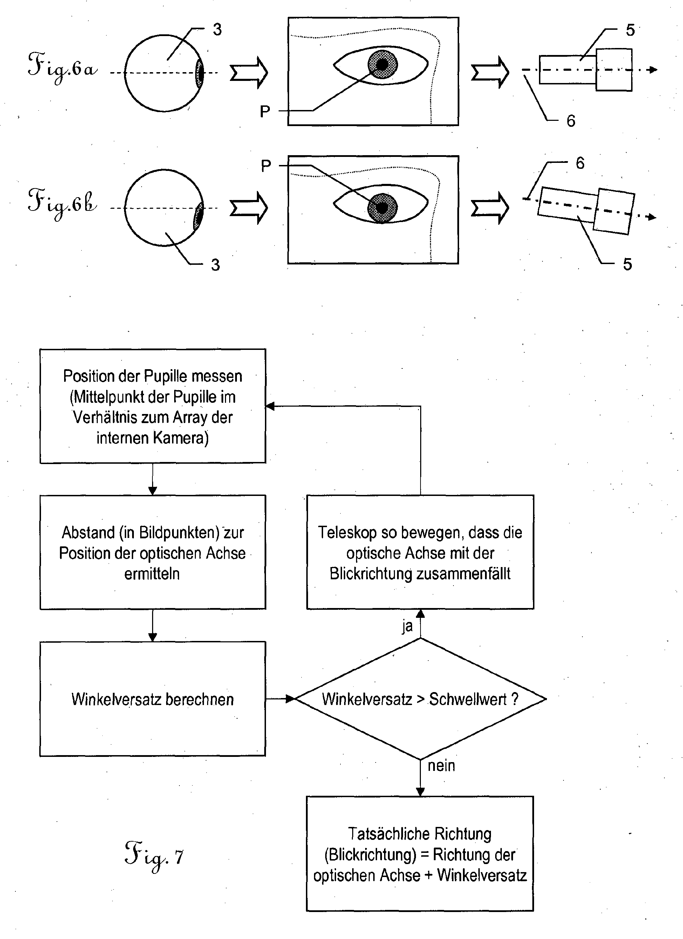

Figur 6a zeigt schematisch ein Benutzerauge 3 in einer Ausgangsposition, dessen Blickrichtung exakt geradeaus nach vorne ausgerichtet ist, sowie ein Augenbild dieses Benutzerauges 3 und ein Teleskop 5 in einer Ausgangsposition, in der die optische Achse 6 auf das Ziel ausgerichtet ist, das der Benutzer durch das Okular 13 betrachtet.

In Figur 6b ist dasselbe Benutzerauge 3 mit einer veränderten Blickrichtung dargestellt. In dem erfassten Augenbild wird eine veränderte Position der Pupille P registriert. In Abhängigkeit von der registrierten Position der Pupille wird von der Blickrichtungsbestimmungseinrichtung die Blickrichtung des Benutzerauges 3 bestimmt, oder, wie in Figur 4a dargestellt, mittels Masken 38,39 zur Augen- und Pupillen- bzw. Iriserkennung von einer Position der Pupille P innerhalb des Auges 3 abgeleitet. Durch eine (nicht dargestellte) Antriebseinrichtung wird das Teleskop 5 abhängig von der so bestimmten oder ermittelten Blickrichtung ausgerichtet, sodass die optische Achse 6 des Teleskops 5 auf das Ziel gerichtet ist, das der Benutzer durch das Okular 13 betrachtet. Die Ausrichtung des Teleskops 5 kann dabei in Abhängigkeit von einem Übersetzungsverhältnis erfolgen, das unter Einbeziehung eines aktuellen Vergrößerungsfaktors im Rahmen einer Kalibrierung ermittelt wird.

Figur 7 zeigt ein Flussdiagramm, das wesentliche Verfahrensschritte zur Ausführung der voranstehend beschriebenen beispielhaften Ausführungsform beschreibt.

Nach dem Messen der Position der Pupille und der Ermittlung des Abstands des Mittelpunkts der Pupille zu der Position der optischen Achse wird mittels Dreisatz, wie voranstehend beschrieben wurde, der Winkelversatz berechnet. Ist der dabei ermittelte Wert, beispielsweise der Winkel α, kleiner als ein vorgegebener Schwellwert, wird bestimmt, dass die tatsächliche Blickrichtung der Richtung der optischen Achse und dem Winkelversatz entspricht. In diesem Fall wird keine Veränderung der Position des Teleskops vorgenommen.

Ist der berechnete Winkelversatz größer als der vorgegebene Schwellwert, wird bestimmt, dass das Teleskop zu bewegen ist, insbesondere bis die optische Achse 6 des Teleskops 5 auf das Ziel ausgerichtet ist, das der Benutzer durch das Okular 13 betrachtet.

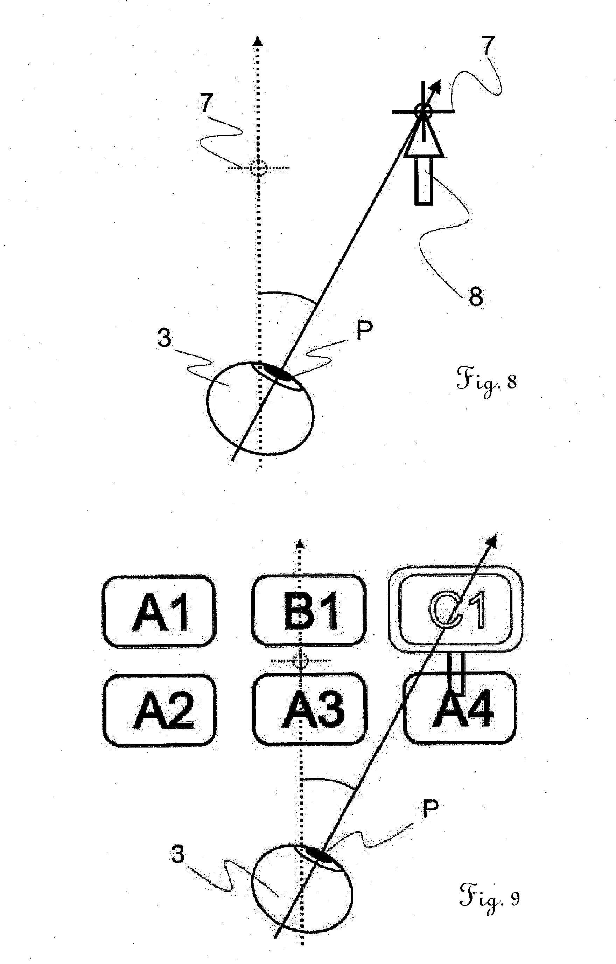

Figur 8 stellt ein zweites Ausführungsbeispiel der vorliegenden Erfindung dar. Die Vermessungsvorrichtung der zweiten Ausführungsform ist mit einem Fadenkreuz 7 versehen, dessen Position nicht fest mit der optischen Achse verbunden ist, sondern das beweglich ist. Dies kann beispielsweise dadurch erreicht werden, dass die Vermessungsumgebung nicht direkt durch die Optik eines Teleskops betrachtet wird, sondern als Bild auf eine Anzeige, wie zum Beispiel einen LCD-Bildschirm, projiziert wird. Betrachtet der Benutzer dieses Bild, welches erfindungsgemäss dem Bild eines durch die Anzieleinrichtung anvisierten Ziels entspricht, auf dem LCD-Bildschirm, wird die Position seiner Pupille P ebenfalls fortlaufend durch die Kamera 4 erfasst. Die Position des Fadenkreuzes 7 wird über eine Steuereinrichtung an die ermittelte Blickrichtung angepasst, ohne dass es erforderlich ist, die Ausrichtung der Anzieleinrichtung selbst zu ändern. Dies kann durch Einblenden des Fadenkreuzes 7 in das auf dem LCD-Bildschirm dargestellte Bild oder andere bekannte Mittel erfolgen.

In Figur 8 ist das Benutzerauge auf die Spitze des Kirchturms 8 gerichtet, und die Position des Fadenkreuzes 7, dessen Ursprungsposition in der Bildmitte mit punktierten Linien dargestellt ist, wird nach der Ermittlung der aktuellen Blickrichtung entsprechend zu der Spitze des Kirchturms 8 verschoben.

Als Variante der zweiten Ausführungsform ist es möglich, die Darstellung des durch die Anzieleinrichtung anvisierten Ziels mittels Bildextraktionsmitteln zu analysieren und als Vermessungsziel interessante Objekte wie zum Beispiel den Kirchturm 8 zu ermitteln. In diesem Fall genügt es, wenn die Blickrichtung des Benutzerauges 3 in die Nähe des Kirchturms 8 gerichtet ist. Da der Kirchturm 8 als mögliches Vermessungsziel erkannt wird, wird gemäß der Variante der zweiten Ausführungsform das Fadenkreuz 7 an der Spitze des Kirchturms 8 positioniert. Vorteilhaft bei dieser Variante ist, dass bei der Bestimmung der Blickrichtung des Benutzerauges 3 lediglich eine geringe Genauigkeit erforderlich ist, wodurch Rechenzeit, Speicherressourcen und so weiter eingespart werden können.

Gemäß der Variante der zweiten Ausführungsform ist es erforderlich, zu bestätigen, dass das von der Vermessungsvorrichtung ausgewählte Ziel - im vorliegenden Fall der Kirchturm 8 - tatsächlich als Vermessungsziel dient. Um das mögliche Ziel definitiv als Vermessungsziel zu bestimmen, ist es möglich, insbesondere mittels einer Bewegung der Augenlider (Zwinkern), Steuerbefehle abzugeben, da die Kamera 4 bevorzugt auch in der Lage ist, eine Folge von Augenbildern, in denen die Pupille P oder andere Augeninformationen nicht zu erfassen sind, als Zwinkern zu erkennen und dies als Steuerbefehl zu interpretieren. Hierbei ist es ganz nach Belieben möglich, verschiedene Abfolgen eines Zwinkerns verschiedenen Steuerbefehlen zuzuweisen, wodurch ein vollständig berührungsloses Arbeiten mit der erfindungsgemäßen Vermessungsvorrichtung möglich ist.

Auch bestimmten Bewegungen des Augapfels (Augenbewegungen) können Steuerbefehle zugeordnet werden. Dies können beispielsweise Kombinationen von Bewegungen der Pupille nach links, rechts, oben oder unten sein. Bevorzugt werden diverse Steuerbefehle am Beginn der Arbeit durch den Benutzer vorgegeben und von der Blickrichtungsbestimmungseinrichtung gelernt. Beispielsweise kann der Beginn und/oder das Ende einer dynamischen Ausrichtungsänderung der Anzieleinrichtung mittels eines solchen berührungslosen Steuerbefehls eingeleitet werden.

Gemäß einer weiteren bevorzugten Variante der zweiten Ausführungsform ist es möglich, Piktogramme oder Textfelder in die Darstellung des durch die Anzieleinrichtung anvisierten Ziels einzublenden, die verschiedenen Steuerbefehlen entsprechen. In Figur 9 sind diese beispielhaft mit A1, B1, C1 und mit A2 bis A4 bezeichnet. Sind die Steuerbefehle eingeblendet, ist die Kamera 4 in der Lage, je nach Blickrichtung des Benutzerauges 3 den betrachteten Steuerbefehl zu identifizieren und dann aufgrund einer Betätigung wie zum Beispiel eines Zwinkerns durchzuführen. In der Darstellung der Figur 8 ist beispielsweise gerade der Steuerbefehl C1 markiert.

Die am Beispiel der zweiten Ausführungsform beschriebenen Varianten sind aber nicht auf diese zweite Ausführungsform beschränkt, sondern können beispielsweise auch in einem Teleskop 5 gemäß der ersten Ausführungsform angewendet werden. Dazu wird ein Bild des Fadenkreuzes 7, der Piktogramme der Steuerbefehle usw. in die Bildebene des Teleskops 5 projiziert.

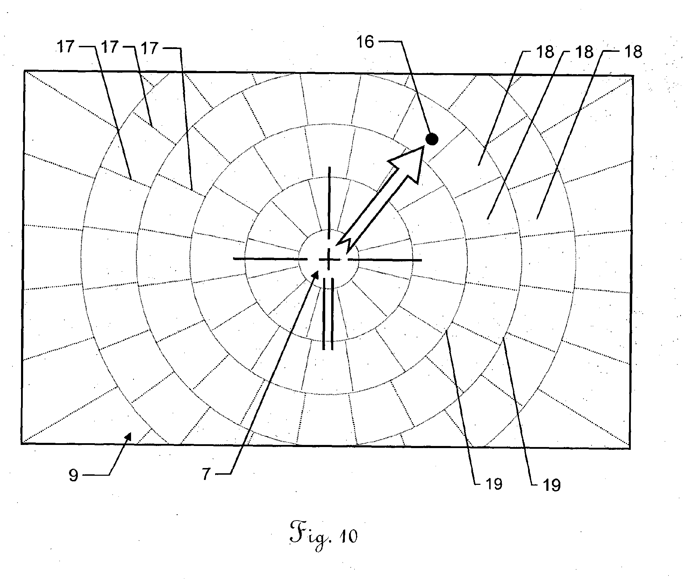

In Figur 10 ist eine weitere Variante der zweiten Ausführungsform der Erfindung mit einer dynamischen Anzielfunktion illustriert. Ein vom Teleskop erzeugtes Bild 2 oder ein Display ist in ein virtuelles Liniennetz 9 eingeteilt, entsprechend digitalisierten Entfernungen und Richtungen von dem Ziel-Bildpunkt bzw. dem Mittelpunkt des Fadenkreuzes 7 zu Gruppen von Displaypunkten. In der Ausführungsform gemäß Figur 10 ist das virtuelle Liniennetz 9 aus konzentrischen Kreislinien 19 um den Fadenkreuzmittelpunkt und diese Kreislinien schneidende, vom Fadenkreuzmittelpunkt ausgehende Radiallinien 17 gebildet, sodass dadurch das Display in - jeweils eine Gruppe von mehreren Displaypunkten enthaltende - Sektoren 18 aufgeteilt ist. Dabei entsprechen die Sektoren 18 jeweils konkreten Werten für eine Ausrichtungsänderungsrichtung und Ausrichtungsänderungsgeschwindigkeit bei der Änderung der Ausrichtung des Teleskops 5. Das heißt, dass den innerhalb eines Sektors liegenden Displaypunkten jeweils der gleiche konkrete Wert für die Ausrichtungsänderungsrichtung und Ausrichtungsänderungsgeschwindigkeit zugeordnet ist.

Die Änderung der Ausrichtung des Teleskops 5, in vertikaler und, insbesondere gleichzeitig, horizontaler Richtung, in Richtung des in einem Sektor gelegenen anderen markierten Bildpunkts 16 entsprechend einem anderen anzuvisierenden Raumpunkt, wird entweder solange vollzogen, wie dieser andere Bildpunkt 16 kontinuierlich vom Benutzerauge 3 anvisiert wird, oder, nachdem der anvisierte Bildpunkt 16, beispielsweise durch Zwinkern, markiert wurde, bis zum Erreichen der gewünschten Ausrichtung oder der Aufhebung der Markierung. Bei Aufhebung der Markierung, beispielsweise durch erneutes Zwinkern, wird die Verfahrung des Teleskops 5 abgebrochen. Ein Benutzer kann jedoch jederzeit mit seinem Auge 3 einen anderen Displaypunkt in einem anderen Sektor 7 markieren bzw. anvisieren, um eine Änderung der Ausrichtung des Teleskops 5 entsprechend der diesem Sektor zugeordneten Richtung und Geschwindigkeit für das Ändern der Ausrichtung zu veranlassen.

Weiter außen liegende Sektoren, die durch ihre Lage einen größeren Abstand zum Anker-Displaypunkt (d.h. Fadenkreuzmittelpunkt) aufweisen, entsprechen dabei höheren Ausrichtungsänderungsgeschwindigkeiten und weiter innen liegende Sektoren, die einen kleineren Abstand zum Anker-Displaypunkt aufweisen, entsprechen dabei geringeren Ausrichtungsänderungsgeschwindigkeiten. Mit zunehmendem Abstand der jeweiligen Sektoren vom Anker-Displaypunkt nimmt also auch die den Sektoren jeweils zugeordnete Ausrichtungsänderungsgeschwindigkeit zu.

Dabei kann den durch die äußerste Kreislinie definierten Sektoren auch die höchste Verfahrungsgeschwindigkeit (100 %) zugeordnet sein und eine Markierung des Anker-Displaypunkts (also des Fadenkreuzmittelpunkts) eine Verfahrungsgeschwindigkeit von 0 % bedeuten.

Jeder Sektor 18 entspricht des Weiteren einer bestimmten - also diesem zugeordneten - Ausrichtungsänderungsrichtung des Teleskops 5 (azimutal und elevativ). Bei Markierung bzw. Anvisieren eines Bildpunkts z.B. rechts des Fadenkreuzmittelpunktes mit dem Auge 3 wird das Teleskop 5 zur Änderung der Ausrichtung in horizontaler Richtung nach rechts bewegt, bis der vorgenannte andere Bildpunkt nicht mehr markiert bzw. anvisiert wird (beispielsweise, weil nun ein weiterer anderer Displaypunkt markiert wird - und dann die Anzieleinheit mit der diesem Displaypunkt zugeordneten Richtung und Geschwindigkeit weiterverfahren bzw. weitergeändert wird - oder kein Punkt mehr markiert wird - und dann das Verfahren der Anzieleinheit gestoppt wird). Die in Figur 10 dargestellte Situation (mit dem dabei dargestellten Punkt als aktuell markierter Displaypunkt 16) entspricht etwa einer Änderung der Ausrichtung des Teleskops 5 mit einer nach schräg rechts oben Ausrichtungsänderungsrichtung (d.h. einer nach oben zeigenden Richtungsänderungskomponente und einer nach rechts zeigenden Richtungsänderungskomponente, wobei die nach oben zeigende Komponente etwas größer gewählt ist als die nach rechts zeigende) sowie mit einer mittleren Verfahr-Geschwindigkeit. Insbesondere können dafür die Drehantriebe derart angesteuert werden, dass die Anzieleinheit gegenüber der Basis mit 60 % der maximal bereitstellbären Schwenkgeschwindigkeit nach oben schwenkt und mit 40 % der maximal bereitstellbaren Rotier-Geschwindigkeit um die Stehachse nach rechts dreht.

Insbesondere ist dabei das Liniennetz 9 derart aufgebaut, dass eine Vielzahl von Sektoren 18 definiert werden, insbesondere mindestens etwa dreißig Sektoren, im Speziellen mindestens etwa fünfzig Sektoren.

Wie voranstehend beschrieben wurde, ermöglicht es die Erfindung eine Vermessungsvorrichtung wie zum Beispiel eine Totalstation durch eines oder beide Augen beziehungsweise die Pupillen des Benutzers zu steuern. Entsprechend besteht keine Notwendigkeit mehr, das Vermessungsinstrument zu berühren, wodurch Erschütterungen und daraus resultierende Störungen der Vermessungsarbeit vermieden werden können. Abgesehen vom direkten Anvisieren von Zielpunkten und der Einstellung des Vermessungsinstruments ist es auch möglich, Steuerbefehle auszuführen, die in der Anzieleinrichtung der Vermessungsvorrichtung dargestellt werden. Entsprechend entfällt auch der ständige Wechsel zwischen dem Blick durch das Okular zum Anvisieren eines Ziels, dem Blick auf per Hand zu bedienende Eingabemittel zum Geben von Steuerbefehlen und einem erneuten Blick durch das Okular.

Diese Steuerbefehle können in ein projiziertes oder an einer Anzeige wie z.B. einem LCD-Bildschirm dargestelltes Bild der Vermessungsumgebung eingeblendet werden, können aber auch mittels eines eigenen Displays in ein Teleskop oder Ähnliches eingeblendet werden. Die Auswahl von verschiedenen Menüpunkten kann beispielsweise durch das Öffnen und Schließen (Zwinkern) des Auges durchgeführt werden. Ebenfalls ist es möglich, diese Steuerbefehle über eine Fernbedienung, wie zum Beispiel eine Funkfernbedienung, zu erreichen.

Bevorzugt kann es ebenfalls möglich sein, bestimmte Funktionen oder die gesamte berührungslose Steuerung vorübergehend abzuschalten, um ein übermäßiges Ermüden des Benutzers und eine daraus resultierende fehlerhafte Bedienung durch unbeabsichtigte Augenbewegungen zu vermeiden. Beispielsweise ist es möglich, alternativ oder zusätzlich eine Steuerung durch die Stimme des Benutzers zu aktivieren bzw. herbeizuführen. Bevorzugt kann die Stimme des Benutzers dazu dienen, die Steuerung durch das Benutzerauge zu aktivieren und zu deaktivieren. Alternativ oder zusätzlich können auch eine Funkfernsteuerung und/oder Schalter oder Knöpfe an der Vermessungsvorrichtung eingesetzt werden.

Die Vermessungsvorrichtung kann zur Erhöhung der Genauigkeit über einen Kalibriermodus verfügen, in dem der Benutzer angehalten ist, eine Reihe von nacheinander gekennzeichneten Bildpunkten zu fokussieren. Durch die gleichzeitig stattfindende Messung der Pupillenposition ist es dabei möglich, Abweichungen der ermittelten Blickrichtung von der tatsächlichen Blickrichtung festzustellen und somit anatomische Besonderheiten des Benutzerauges auszugleichen.

Ebenfalls können Steuersignale, wie zum Beispiel das Zwinkern des Benutzerauges, durch eine entsprechende Kalibrierung angepasst werden.

Durch das anhand der zweiten Ausführungsform beschriebene Bewegen des Fadenkreuzes kann eine Ablenkung des Benutzers aufgrund der Tatsache, dass das Auge des Benutzers sich sehr nahe an dem Teleskop befindet, vermieden werden.

Durch Zwinkern des Benutzerauges können verschiedene Steuerbefehle gegeben werden. Beispielsweise kann das einmalige Schließen und Öffnen des Auges zu einem Einblenden des Menüs führen, ein zweimaliges Öffnen und Schließen des Auges zur Auswahl des gerade anvisierten Menüpunkts führen oder das Auslösen der Messung bewirken und das dreimalige Schließen und Öffnen des Auges kann eine Abbruchfunktion herbeiführen.

In die Darstellung des anvisierten Ziels kann auch ein Zeiger (Mauszeiger) eingeblendet sein, der der Pupillenbewegung folgt.

Die Auswahl eines Zielpunkts kann aber auch dadurch erfolgen, dass dieser für einen längeren Zeitraum, wie zum Beispiel zwei Sekunden, betrachtet wird. Die Steuerung ist dann in der Lage, den ausgewählten Zielpunkt durch Beleuchten oder eine Farbänderung anzuzeigen. Die angezeigte Auswahl kann dann durch den Benutzer, beispielsweise durch ein Zwinkern, bestätigt werden.

Bevorzugt kann es auch möglich sein, die Vermessungsvorrichtung dynamisch zu steuern. Dies bedeutet, dass bei einer größeren Abweichung der Pupille von der optischen Achse, die Endgeschwindigkeit bei der Positionsänderung der Anzieleinrichtung beziehungsweise die Bewegungsgeschwindigkeit des Fadenkreuzes höher ist als bei einem geringen Abstand.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

## Patentansprüche

1. Geodätisches Vermessungsgerät (1), insbesondere Theodolit oder Totalstation, zur Positionsbestimmung eines Zielpunkts, mit
• einer Anzieleinrichtung (5), insbesondere Teleskop, wobei die Anzieleinrichtung (5) gegenüber einer Basis (11) des Vermessungsgeräts (1) zur Änderung deren Ausrichtung motorisiert schwenkbar ist und zumindest eine eine optische Zielachse (6) definierende Objektiveinheit (21) aufweist,
• Winkelmessfunktionalität zur hochpräzisen Erfassung der Ausrichtung der Zielachse (6), und
• Auswertemitteln zur Datenspeicherung und Steuerung der Ausrichtung der Anzieleinrichtung (5),
**gekennzeichnet durch**
eine Augenbilderfassungseinrichtung (4, 4'), die ausgelegt ist, Augenbilder eines Auges (3) eines Benutzers zu erfassen,
und **dadurch**, dass die Auswertemittel zur Ausführung einer automatischen blickrichtungsabhängigen Anzielfunktionalität derart ausgebildet sind, dass nach Funktionsstart automatisch erfolgen:
• ein Aufnehmen mindestens eines Augenbildes,
• ein Bestimmen einer Blickrichtung des Benutzerauges (3), oder von Augeninformationen, die geeignet sind, eine Blickrichtung des Benutzerauges (3) abzuleiten, mittels Bildverarbeitung anhand des mindestens einen Augenbildes, und
• ein motorisiertes Ändern der Ausrichtung der Anzieleinrichtung (5) abhängig von der Blickrichtung des Benutzerauges (3) oder von den Augeninformationen.

2. Geodätisches Vermessungsgerät (1) nach Anspruch 1,
**dadurch gekennzeichnet, dass**
die Augenbilderfassungseinrichtung (4, 4') in oder an der Anzieleinrichtung (5) angebracht ist und insbesondere ausgelegt ist, Augenbilder eines an einem benutzerseitigen Ende der Anzieleinrichtung (5) befindlichen Auges (3) eines Benutzers zu erfassen und/oder mindestens eine Kamera umfasst, die geeignet ist,
• fortlaufend Augenbilder zu erfassen, insbesondere mindestens drei Augenbilder pro Sekunde, oder
• einzelne Augenbilder zu erfassen.

3. Geodätisches Vermessungsgerät (1) nach Anspruch 1 oder Anspruch 2,
**dadurch gekennzeichnet, dass**
die Augeninformationen mindestens umfassen:
• eine Position der Pupille (P), des Pupillenmittelpunkts oder der Iris im Augenbild;
• eine Verteilung heller und dunkler Flächen im Augenbild;
• einen Abstand der Pupille (P), des Pupillenmittelpunkts oder der Iris von der Zielachse (6);
• eine Richtung von der Zielachse (6) zur Pupille (P), zum Pupillenmittelpunkt oder zur Iris;
• einen Durchmesser des Augapfels des Benutzerauges (3);
• einen Abstand des Augapfelmittelpunkts (M) von der Zielachse (6); oder
• einen Winkel (α) zwischen der Zielachse (6) und der Blickrichtung.

4. Geodätisches Vermessungsgerät (1) nach einem der vorangegangenen Ansprüche,
**dadurch gekennzeichnet, dass**
die Ausrichtung der Anzieleinrichtung (5) auf Basis der Blickrichtung des Benutzerauges (3) oder der Augeninformationen derart veränderbar ist, dass die Zielachse (6) der Anzieleinrichtung (5) und die Blickrichtung des Benutzerauges (3) zusammenfallen.

5. Geodätisches Vermessungsgerät (1) nach einem der vorangegangenen Ansprüche,
**dadurch gekennzeichnet, dass**
an der Anzieleinrichtung (5) eine Ausrichtungshilfe (26), insbesondere ein Fadenkreuz, vorgesehen ist, und auf Basis der Blickrichtung des Benutzerauges (3) oder der Augeninformationen die Ausrichtung der Anzieleinrichtung (5) derart veränderbar ist, dass die Blickrichtung des Benutzerauges (3) durch den Mittelpunkt der Ausrichtungshilfe (26) gerichtet ist.

6. Geodätisches Vermessungsgerät (1) nach einem der Ansprüche 4 oder 5,
**dadurch gekennzeichnet, dass**
eine Veränderungsgeschwindigkeit der Ausrichtung der Anzieleinrichtung (5) oder des Fadenkreuzes (7) abhängig ist von der Blickrichtung des Benutzerauges (3) oder von den Augeninformationen.

7. Geodätisches Vermessungsgerät (1) nach einem der vorangegangenen Ansprüche
**dadurch gekennzeichnet, dass**
die Anzieleinrichtung (5) einen Kamerasensor (22) zur Erfassung eines Kamerabildes (2) der anvisierten Zielmarke aufweist, und das Vermessungsgerät (1) Mittel zur Darstellung dieses Kamerabildes (2) aufweist.

8. Geodätisches Vermessungsgerät (1) nach einem der vorangegangenen Ansprüche
**dadurch gekennzeichnet, dass**
die Augenbilderfassungseinrichtung (4, 4') zur Erfassung von Augenbildern
• mit einer Beleuchtungseinrichtung ausgestattet ist, die dazu ausgelegt ist, das Auge (3) des Benutzers zu beleuchten, insbesondere mit Infrarotlicht;
• lichtempfindliche Sensoren beinhaltet, insbesondere CCD- oder CMOS-Bildsensoren; und/oder
• dazu ausgelegt ist, ein Oberflächenprofil des Auges (3) zu erstellen, insbesondere mittels eines Scanners.

9. Verfahren zum Steuern einer Anzieleinrichtung (5) eines geodätischen Vermessungsgeräts (1), insbesondere eines Theodoliten oder einer Totalstation,
**dadurch gekennzeichnet, dass**
Augenbilder eines Benutzerauges (3) erfasst werden, wobei nach Funktionsstart automatisch erfolgen:
• ein Aufnehmen mindestens eines Augenbildes,
• ein Bestimmen einer Blickrichtung des Benutzerauges (3) oder von Augeninformationen, die geeignet sind, eine Blickrichtung des Benutzerauges (3) abzuleiten, mittels Bildverarbeitung anhand des mindestens einen Augenbildes, und
• ein motorisiertes Ändern der Ausrichtung der Anzieleinrichtung (5) abhängig von der Blickrichtung des Benutzerauges (3) oder den Augeninformationen.

10. Verfahren nach Anspruch 9
**dadurch gekennzeichnet, dass**
die Augeninformationen mindestens umfassen:
• eine Position der Pupille (P), des Pupillenmittelpunkts oder der Iris im Augenbild; oder
• eine Verteilung heller und dunkler Flächen im Augenbild; oder
• einen Abstand der Pupille (P), des Pupillenmittelpunkts oder der Iris von der Zielachse (6); oder
• eine Richtung von der Zielachse (6) zur Pupille (P), zum Pupillenmittelpunkt oder zur Iris; oder
• einen Durchmesser des Augapfels des Benutzerauges (3);
• einen Abstand des Augapfelmittelpunkts (M) von der Zielachse (6); oder
• einen Winkel (α) zwischen der Zielachse (6) und der Blickrichtung.

11. Verfahren nach Anspruch 9 oder Anspruch 10,
**dadurch gekennzeichnet, dass**
am Vermessungsgerät (1) Auswertemittel bereitgestellt werden, die ein Steuersignal erfassen, falls
• in einer vorbestimmten Anzahl in direkter Folge erfasster Augenbilder die Blickrichtung des Benutzerauges (3) oder die Augeninformationen nicht ermittelbar sind, insbesondere aufgrund von Zwinkern durch den Benutzer;
• in einer vorbestimmten Anzahl in direkter Folge erfasster Augenbilder ein geschlossenes Benutzerauge (3) ermittelt wird; und/oder
• die Augenbilderfassungseinrichtung (4, 4') eine vorab, insbesondere benutzerseitig, definierte Bewegung oder Kombination von Bewegungen der Blickrichtung des Benutzerauges (3) ermittelt oder anhand der Augeninformationen ableitet.

12. Verfahren nach einem der Ansprüche 9 bis 11,
**gekennzeichnet dadurch, dass**
die Darstellung des Ziels durch Darstellungen von Steuerbefehlen überlagerbar oder ersetzbar ist, und Auswertemittel des Vermessungsgeräts (1) auf Basis der Blickrichtung des Benutzerauges (3) oder der Augeninformationen einen der dargestellten Steuerbefehle auswählen.

13. Verfahren nach einem der Ansprüche 9 bis 12,
**gekennzeichnet durch**
eine Zielpunkterkennungseinrichtung in der Darstellung des anvisierten Ziels nahe der Blickrichtung liegende mögliche Zielpunkte (8) erkennt und markiert und/oder auf Abgabe eines Steuersignals hin als Zielpunkt in einer Speichereinrichtung speichert.

14. Verfahren nach einem der Ansprüche 9 bis 13,
**dadurch gekennzeichnet, dass**
die Darstellung des anvisierten Ziels mittels eines um einen Anker-Displaypunkt angelegten virtuellen Liniennetzes (9) in virtuelle Sektoren (18) eingeteilt ist, welches durch konzentrische Kreislinien (19) um den Anker-Displaypunkt und diese Kreislinien (19) schneidende, von dem Anker-Displaypunkt ausgehende Radiallinien (17) gebildet wird, wobei die Sektoren (18) digitalisierten Werten für eine Ausrichtungsänderungsrichtung und eine Ausrichtungsänderungsgeschwindigkeit entsprechen, und das Ändern der Ausrichtung der Anzieleinrichtung (5) mit der dem jeweiligen Sektor zugeordneten Ausrichtungsänderungsrichtung und Ausrichtungsänderungsgeschwindigkeit solange vollzogen wird, wie einer der innerhalb dieses Sektors liegenden Displaypunkte markiert wird, und die Ausrichtungsänderungsrichtung und Ausrichtungsänderungsgeschwindigkeit entsprechend geändert wird, sobald ein innerhalb eines anderen Sektors liegender Displaypunkt markiert wird, nämlich auf die dem anderen Sektor entsprechende Ausrichtungsänderungsrichtung bzw. Ausrichtungsänderungsgeschwindigkeit.

15. Computerprogrammprodukt mit Programmcode, der auf einem maschinenlesbaren Träger gespeichert ist, zur Ausführung des Verfahrens nach einem der Ansprüche 9 bis 14, insbesondere wenn das Programm auf einer als Auswertemittel des Vermessungsgeräts (1) nach einem der Ansprüche 1 bis 8 ausgebildeten elektronischen Datenverarbeitungseinheit ausgeführt wird.

## Claims

1. Geodetic measuring appliance (1), in particular theodolite or total station, for determining the position of a target point, comprising
• a targeting device (5), in particular telescope, wherein the targeting device (5) is pivotable in a motorized manner relative to a base (11) of the measuring appliance (1) for the purpose of changing the alignment of said targeting device and has at least one objective unit (21) that defines an optical target axis (6),
• angle measuring functionality for high-precision acquisition of the alignment of the target axis (6), and
• evaluation means for data storage and control of the alignment of the targeting device (5),
**characterized by**
an eye image acquisition device (4, 4'), which is designed to acquire eye images of an eye (3) of a user,
and in that the evaluation means are designed for implementing an automatic viewing-direction-dependent targeting functionality in such a way that the following take place automatically after the function has started:
• at least one eye image is recorded,
• a viewing direction of the user's eye (3) or of eye information suitable for deriving a viewing direction of the user's eye (3) is determined by means of image processing on the basis of the at least one eye image, and
• the alignment of the targeting device (5) is changed in a motorized manner depending on the viewing direction of the user's eye (3) or depending on the eye information.

2. Geodetic measuring appliance (1) according to Claim 1,
**characterized in that**
the eye image acquisition device (4, 4') is fitted in or on the targeting device (5) and in particular is designed to acquire eye images of a user's eye (3) situated at a user end of the targeting device (5) and/or comprises at least one camera suitable
• for acquiring eye images continuously, in particular at least three eye images per second, or
• for acquiring individual eye images.

3. Geodetic measuring appliance (1) according to Claim 1 or Claim 2,
**characterized in that**
the eye information comprises at least:
• a position of the pupil (P), of the pupil midpoint or of the iris in the eye image;
• a distribution of bright and dark areas in the eye image;
• a distance between the pupil (P), the pupil midpoint or the iris and the target axis (6);
• a direction from the target axis (6) to the pupil (P), to the pupil midpoint or to the iris;
• a diameter of the eyeball of the user's eye (3) ;
• a distance between the eyeball midpoint (M) and the target axis (6); or
• an angle (α) between the target axis (6) and the viewing direction.

4. Geodetic measuring appliance (1) according to any one of the preceding claims,
**characterized in that**
the alignment of the targeting device (5) is variable on the basis of the viewing direction of the user's eye (3) or the eye information in such a way that the target axis (6) of the targeting device (5) and the viewing direction of the user's eye (3) coincide.

5. Geodetic measuring appliance (1) according to any one of the preceding claims,
**characterized in that**
an alignment aid (26), in particular a reticle, is provided on the targeting device (5), and the alignment of the targeting device (5) is variable on the basis of the viewing direction of the user's eye (3) or the eye information in such a way that the viewing direction of the user's eye (3) is directed through the midpoint of the alignment aid (26).

6. Geodetic measuring appliance (1) according to either of Claims 4 and 5,
**characterized in that**
a variation speed of the alignment of the targeting device (5) or of the reticle (7) is dependent on the viewing direction of the user's eye (3) or on the eye information.

7. Geodetic measuring appliance (1) according to any one of the preceding claims,
**characterized in that**
the targeting device (5) has a camera sensor (22) for acquiring a camera image (2) of the sighted target mark, and the measuring appliance (1) has means for representing said camera image (2).

8. Geodetic measuring appliance (1) according to any one of the preceding claims,
**characterized in that**
the eye image acquisition device (4, 4') for acquiring eye images
• is equipped with an illumination device designed to illuminate the user's eye (3), in particular with infrared light;
• comprises light-sensitive sensors, in particular CCD or CMOS image sensors; and/or
• is designed to create a surface profile of the eye (3), in particular by means of a scanner.

9. Method for controlling a targeting device (5) of a geodetic measuring appliance (1), in particular of a theodolite or of a total station,
**characterized in that**
eye images of a user's eye (3) are acquired, wherein the following take place automatically after the function has started:
• at least one eye image is recorded,
• a viewing direction of the user's eye (3) or of eye information suitable for deriving a viewing direction of the user's eye (3) is determined by means of image processing on the basis of the at least one eye image, and
• the alignment of the targeting device (5) is changed in a motorized manner depending on the viewing direction of the user's eye (3) or depending on the eye information.

10. Method according to Claim 9,
**characterized in that**
the eye information comprises at least:
• a position of the pupil (P), of the pupil midpoint or of the iris in the eye image; or
• a distribution of bright and dark areas in the eye image; or
• a distance between the pupil (P), the pupil midpoint or the iris and the target axis (6); or
• a direction from the target axis (6) to the pupil (P), to the pupil midpoint or to the iris; or
• a diameter of the eyeball of the user's eye (3) ;
• a distance between the eyeball midpoint (M) and the target axis (6); or
• an angle (α) between the target axis (6) and the viewing direction.

11. Method according to Claim 9 or Claim 10,
**characterized in that**
evaluation means are provided on the measuring appliance (1) and acquire a control signal if
• the viewing direction of the user's eye (3) or the eye information cannot be determined in a predetermined number of eye images acquired in direct succession, in particular on account of blinking by the user;
• a closed user's eye (3) is determined in a predetermined number of eye images acquired in direct succession; and/or
• the eye image acquisition device (4, 4') determines a movement or combination of movements of the viewing direction of the user's eye (3), said movement being defined beforehand, in particular by the user, or derives it on the basis of the eye information.

12. Method according to any one of Claims 9 to 11,
**characterized in that**
the representation of the target can be superimposed or can be replaced by representations of control commands, and evaluation means of the measuring appliance (1) select one of the represented control commands on the basis of the viewing direction of the user's eye (3) or the eye information.

13. Method according to any one of Claims 9 to 12,
**characterized by**
a target point identification device identifies and marks possible target points (8) lying near the viewing direction in the representation of the sighted target and/or stores them as target point in a storage device in response to a control signal being output.

14. Method according to any one of Claims 9 to 13,
**characterized in that**
the representation of the sighted target is subdivided into virtual sectors (18) by means of a virtual line grid (9) placed around an anchor display point, said grid being formed by concentric circular lines (19) around the anchor display point and radial lines (17) which proceed from the anchor display point and intersect said circular lines (19), wherein the sectors (18) correspond to digitized values for an alignment change direction and an alignment change speed, and the alignment of the targeting device (5) is changed with the alignment change direction and alignment change speed assigned to the respective sector for as long as one of the display points lying within said sector is marked, and the alignment change direction and alignment change speed are correspondingly changed as soon as a display point lying within a different sector is marked, namely to the alignment change direction and respectively alignment speed corresponding to the different sector.

15. Computer program product comprising program code, stored on a machine-readable carrier, for carrying out the method according to any one of Claims 9 to 14, in particular if the program is executed on an electronic data processing unit embodied as evaluation means of the measuring appliance (1) according to any one of Claims 1 to 8.

## Revendications

1. Appareil de mesure géodésique (1), en particulier théodolite ou station totale, pour la détermination de la position d'un point cible avec
• un dispositif de visée (5), en particulier un télescope, le dispositif de visée (5) étant pivotant de manière motorisée par rapport à une base (11) de l'appareil de mesure (1) pour modifier l'orientation de celui-ci et au moins une unité d'objectif (21) qui définit un axe de visée optique (6),
• fonctionnalité de mesure d'angle pour la détection extrêmement précise de l'orientation de l'axe de visée (6),
• des moyens d'évaluation pour le stockage de données et la commande de l'orientation du dispositif de visée (5),
**caractérisé par**
un dispositif de détection d'images de l'oeil (4, 4') qui est conçu pour détecter des images d'un oeil (3) d'un utilisateur
et en ce que les moyens d'évaluation sont configurés pour exécuter une fonctionnalité de visée automatique qui dépend de la direction du regard de telle manière
• qu'une prise de vue d'au moins une image de l'oeil,
• qu'une détermination d'une direction du regard de l'oeil de l'utilisateur (3) ou d'informations de l'oeil qui sont appropriées à déduire une direction du regard de l'oeil de l'utilisateur (3) par traitement à l'aide d'au moins une image de l'oeil et
• qu'une modification motorisée de l'orientation du dispositif de visée (5) en fonction de la direction du regard de l'oeil de l'utilisateur (3) ou des informations de l'oeil
sont effectuées automatiquement après démarrage de la fonction.

2. Appareil de mesure géodésique (1) selon la revendication 1, **caractérisé en ce que** le dispositif de détection d'images de l'oeil (4, 4') est fixé dans ou sur le dispositif de visée (5) et est conçu en particulier pour détecter des images de l'oeil d'un oeil (3) qui se trouve à une extrémité côté utilisateur du dispositif de visée (5) d'un utilisateur et/ou comprend au moins une caméra qui est appropriée
• à saisir en continu des images de l'oeil, en particulier au moins trois images de l'oeil par seconde ou
• à saisir des images individuelles de l'oeil.

3. Appareil de mesure géodésique (1) selon la revendication 1 ou la revendication 2, **caractérisé en ce que** les informations de l'oeil comprennent au moins :
• une position de la pupille (P), du centre de la pupille ou de l'iris dans l'image de l'oeil ;
• une répartition de surfaces claires et foncées dans l'image de l'oeil;
• une distance de la pupille (P), du centre de la pupille ou de l'iris par rapport à l'axe de visée (6) ;
• une direction de l'axe de visée (6) vers la pupille (P), vers le centre de la pupille ou vers l'iris ;
• un diamètre du globe oculaire de l'oeil de l'utilisateur (3) ;
• une distance du centre du globe oculaire (M) de l'axe de visée (6) ou
• un angle (α) entre l'axe de visée (6) et la direction du regard.

4. Appareil de mesure géodésique (1) selon l'une des revendications précédentes, **caractérisé en ce que** l'orientation du dispositif de visée (5) peut être modifiée sur la base de la direction du regard de l'oeil de l'utilisateur (3) ou des informations de l'oeil de telle manière que l'axe de visée (6) du dispositif de visée (5) et la direction du regard de l'oeil de l'utilisateur (3) coïncident.

5. Appareil de mesure géodésique (1) selon l'une des revendications précédentes, **caractérisé en ce qu'**il est prévu sur le dispositif de visée (5) une aide à l'orientation (26), en particulier un réticule à croisée, et l'orientation du dispositif de visée (5) peut être modifiée sur la base de la direction du regard de l'oeil de l'utilisateur (3) ou des informations de l'oeil de telle manière que la direction du regard de l'oeil de l'utilisateur (3) est dirigée à travers le centre de l'aide à l'orientation (26).

6. Appareil de mesure géodésique (1) selon l'une des revendications 4 ou 5, **caractérisé en ce qu'**une vitesse de modification de l'orientation du dispositif de visée (5) ou du réticule à croisée (7) dépend de la direction du regard de l'oeil de l'utilisateur (3) ou des informations de l'oeil.

7. Appareil de mesure géodésique (1) selon l'une des revendications précédentes, **caractérisé en ce que** le dispositif de visée (5) présente un capteur de caméra (22) pour la détection d'une image de caméra (2) du repère de visée visé et l'appareil de mesure (1) présente des moyens pour la représentation de cette image de caméra (2).

8. Appareil de mesure géodésique (1) selon l'une des revendications précédentes, **caractérisé en ce que** le dispositif de détection d'images de l'oeil (4, 4') est équipé pour la détection d'images de l'oeil
• d'un dispositif d'éclairage qui est conçu pour éclairer l'oeil (3) de l'utilisateur, en particulier avec de la lumière infrarouge ;
• contient des capteurs sensibles à la lumière, en particulier des capteurs CCD ou CMOS et/ou
• est conçu pour réaliser un profil de la surface de l'oeil (3), en particulier au moyen d'un scanner.

9. Procédé pour commander un dispositif de visée (5) d'un appareil de mesure géodésique (1), en particulier d'un théodolite ou d'une station totale, **caractérisé en ce que** des images de l'oeil d'un oeil de l'utilisateur (3) sont saisies, cependant
• qu'une prise de vue d'au moins une image de l'oeil,
• qu'une détermination d'une direction du regard de l'oeil de l'utilisateur (3) ou d'informations de l'oeil qui sont appropriées à déduire une direction du regard de l'oeil de l'utilisateur (3) par traitement à l'aide d'au moins une image de l'oeil et
• qu'une modification motorisée de l'orientation du dispositif de visée (5) en fonction de la direction du regard de l'oeil de l'utilisateur (3) ou des informations de l'oeil
sont effectuées automatiquement après démarrage de la fonction.

10. Procédé selon la revendication 9, **caractérisé en ce que** les informations de l'oeil comprennent au moins :
• une position de la pupille (P), du centre de la pupille ou de l'iris dans l'image de l'oeil ou
• une répartition de surfaces claires et foncées dans l'image de l'oeil;
• une distance de la pupille (P), du centre de la pupille ou de l'iris par rapport à l'axe de visée (6) ;
• une direction de l'axe de visée (6) vers la pupille (P), vers le centre de la pupille ou vers l'iris;
• un diamètre du globe oculaire de l'oeil de l'utilisateur (3) ;
• une distance du centre du globe oculaire (M) de l'axe de visée (6) ou
• un angle (α) entre l'axe de visée (6) et la direction du regard.

11. Procédé selon la revendication 9 ou la revendication 10, **caractérisé en ce que** des moyens d'évaluation sont mis à disposition sur l'appareil de mesure (1), moyens qui détectent un signal de commande au cas où
• dans un nombre prédéterminé d'images de l'oeil saisies en séquence directe la direction du regard de l'oeil de l'utilisateur (3) ou les informations de l'oeil ne peuvent pas être détectées, en particulier à cause de clignements de l'utilisateur ;
• dans un nombre prédéterminé d'images de l'oeil saisies en séquence directe un oeil fermé de l'utilisateur (3) est détecté et/ou
• le dispositif de détection d'images de l'oeil (4, 4') déduit un mouvement défini au préalable, en particulier côté utilisateur, ou une combinaison de mouvements de la direction du regard de l'oeil de l'utilisateur (3) ou à l'aide des informations de l'oeil.

12. Procédé selon l'une des revendications 9 à 11, **caractérisé en ce que** la représentation de la cible peut être superposée ou remplacée par des représentations d'instructions de commande et des moyens d'évaluation de l'appareil de mesure (1) sélectionnent l'une des instructions de commande représentées sur la base de la direction du regard de l'oeil de l'utilisateur (3) ou des informations de l'oeil.

13. Procédé selon l'une des revendications 9 à 12, **caractérisé par** un dispositif de reconnaissance de cible qui reconnaît et marque des points cible possibles situés dans la représentation de la cible visée près de la direction du regard et/ou les mémorise comme cible dans un dispositif de mémorisation après émission d'un signal de commande.

14. Procédé selon l'une des revendications 9 à 13, **caractérisé en ce que** la représentation de la cible visée est divisée en secteurs virtuels (18) au moyen d'un réseau de lignes virtuel (9) appliqué autour d'un point d'affichage d'ancre, réseau qui est formé par des lignes circulaires concentriques (19) autour du point d'affichage d'ancre et des lignes radiales (17) qui coupent ces lignes circulaires (19) qui partent du point d'affichage d'ancre, cependant que les secteurs (18) correspondent à des valeurs numérisées pour une direction de modification d'orientation et une vitesse de modification d'orientation et la modification de l'orientation du dispositif de visée (5) est effectuée avec la direction de modification d'orientation associée au secteur respectif et la vitesse de modification d'orientation jusqu'à ce que l'un des points d'affichage situés à l'intérieur de ce secteur soit marqué et la direction de modification d'orientation et la vitesse de modification d'orientation sont modifiées de manière correspondante dès qu'un point d'affichage situé à l'intérieur d'un autre secteur est marqué, à savoir sur la direction de modification d'orientation ou la vitesse de modification d'orientation qui correspond à l'autre secteur.

15. Produit de programme d'ordinateur qui est mémorisé sur un support lisible par machine ou signal de données d'ordinateur pour l'exécution du procédé selon l'une des revendications 9 à 14, en particulier lorsque le programme est réalisé sur une unité de traitement de données électronique configurée selon l'une des revendications 1 à 8 en tant que moyen d'évaluation de l'appareil de mesure (1).
